# EUROPEAN PATENT APPLICATION

(11) **EP 1 340 775 A1**
(43) Date of publication of application: **03.09.2003**
(21) Application number: 02075799.3
(22) Date of filing: 28.02.2002
(51) Int. Cl.: C08G 59/42, C08L 63/10, C08L 67/06

(54) **High functionality vinyl ester resins compatible with vinyl esters of alpha, alpha branched alkane carboxilic acids**

(71) Applicant: Resolution Research Nederland B.V., 1031 CM Amsterdam (NL)
(72) Inventor: Fonze, Annie B. M. G., 4218 Couthuin (BE); Heymans, Denis M. C., 1340 Ottignies (BE)
(74) Representative: Wittop Koning, Tom Hugo

(57) **Abstract**

High functionality vinyl ester resins, compatible with vinyl esters of α,α-branched alkane carboxylic acids and obtainable by the reaction of
(a) an epoxy resin having at least two epoxy groups per molecule
(b) an ethylenically unsaturated mono carboxylic acid containing from 3-10 carbon atoms
(c) a dicarboxylic acid or anhydride, preferably unsaturated diacid or anhydride, and most preferably an ethylenically unsaturated anhydride
(d) a glycidylester of an α,α branched alkane carboxylic acid having from 5-15 carbon atoms in the acid moiety and preferably from 9 to 13 carbon atoms
curable compositions comprising said high functionality vinyl ester resins and cured compositions in the form of shaped articles.

## Description

The present invention relates to high functionality vinyl ester resins (VER) compatible with vinyl esters of *α,* α branched alkane carboxylic acids and more in particular vinyl esters of α, α branched alkane acids containing from 5 to 13 carbon atoms in the acid moiety.

With the term 'vinyl ester resins' (VER) are meant, by persons skilled in the art, adducts of epoxy resin and ethylenically unsaturated monocarboxylic acids.

Said VER aimed at is to be mixed with up to 60 wt% of the beforementioned vinyl esters monomer relative to the weight of the total VER composition, which can efficiently cured via radical polymerisation by means of an initiator.

Until now, most conventional VER derived from at least an unsaturated dicarboxylic acid and or mono-, di- or polyalcohol,could not be mixed with vinyl esters of α, α branched alkane carboxylic acids in significant proportions i.e. up to 50 wt% of the vinylester of α, α branched alkane carboxylic acid in the mixture, as said components were not fully compatible with said conventional VER. On the other hand, said vinyl ester proportions were considered as necessary for reaching the desired good properties of the cured final compositions.

Conventional polyesters comprising vinyl esters of *α,* α branched alkane carboxylic acids are known from e.g. EP 0 030 050 B1. In said patent specification it was clearly disclosed that the vinyl ester monomers, having a boiling point of at least 150°C and copolymerizable with the polyester, and selected from vinyl caproate, vinyl laurate, vinyl pivalate, vinyl benzoate, vinyl chloroacetate and vinyl Versatate, could be mixed with other monomers and interalia styrene and divinyl styrene.

An object of the present invention is therefore to provide VER which are compatible with vinyl esters of α, α branched alkane carboxylic acids in significant proportions and which can be used in an efficiently curable composition to be cured with a radical initiator and which do not need to be combined with the conventional comonomers like styrene.

As result of extensive research and experimentation, said uncurable polyesters have now surprisingly been found. Accordingly the invention relates to high functionality VER which are compatible with vinyl esters of α, α branched alkane carboxylic acids and are obtainable by the reaction of
(a) an epoxy resin having at least two epoxy groups per molecule
(b) an ethylenically unsaturated mono carboxylic acid containing from 3-10 carbon atoms
(c) a dicarboxylic acid or anhydride, preferably unsaturated diacid or anhydride, and most preferably an ethylenically unsaturated anhydride
(d) a glycidylester of an α, α branched alkane carboxylic acid having from 5-15 carbon atoms in the acid moiety and preferably from 9 to 13 carbon atoms.
   The component (a) can be selected from a variety of epoxy resins comprising diglycidyl ethers of bisphenol A or bisphenol F, and glycidyl ethers of phenol or cresol novolacs.

More in particular component (a) can be selected from the group of epoxy resins commercially available under the tradenames EPON, EPIKOTE such as EPIKOTE 828, EPIKOTE 1001, EPIKOTE 1004, EPIKOTE 1007, EPIKOTE 1009, EPIKOTE 154. (EPON, EPIKOTE are trademarks).

The component (b) can be selected from ethylenically unsaturated carboxylic acids consisting of acrylic acid, α-alkyl substituted acrylic acid, wherein the alkyl group contains from 1 to 4 carbon atoms and preferably 1, crotonic acid, isocrotonic acid, cinnamic acid, allocinnamic acid, angelic acid, tiglic acid, and the like. Preferably acrylic acid or methacrylic acid is used and more preferably acrylic acid.

The component (c) can be selected from maleic acid, fumaric acid, citraconic acid, mesaconic acid, adipic acid, glutaric acid, malonic acid, pimelic acid, or anhydrides thereof. Of said di-acids, maleic acid, fumaric acid or maleic anhydride is preferred.

The component (d) can be selected from a variety of monoglycidyl esters of α, α branched alkane carboxylic acids, such as CARDURA 5, CARDURA 9, CARDURA E10, CARDURA 11, CARDURA 13, GLYDEXX N-10(CARDURA, GLYDEXX are trademarks). Preferred components (d) are CARDURA E10 and GLYDEXX N-10, i.e. a monoglycicyl ester of α, α branched alkane carboxylic acids, wherein the acid moiety contains 10 carbon atoms.

The equivalent ratios between the constituents (a), (b), (c) and (d) can be specified as W:X:Y:Z wherein W=1, X=0.75-1.05, Y=1-2.05 and Z=-0.5-1.05. Preferably the values of X,and Z are as close as possible to 1 and Y is close to 2.

It will be appreciated that another aspect of the present invention is formed by a process for the preparation of the hereinbefore specified polyesters. Two types of process can be used in principle.

The first process actually consists of a first step, comprising the reaction of the epoxy resin with the unsaturated monocarboxylic (e.g. acrylic acid) in a mutual ratio of about 1 equivalent COOH per equivalent epoxy, which is exotherm and should be well controlled, in the presence of a catalyst and a stabiliser until an EGC below 400 mmol/kg and an AV below 100 mg KOH/g are reached, and a second step, comprising the reaction of the formed adduct with the dicarboxylic acid (e.g. maleic anhydride), which is exotherm and should be well controlled, and a third step, comprising the slow addition and reaction of the monoglycidyl ester of α, α branched alkane carboxylic acid (e.g. CARDURA E10) until an EGC below 350 mmol/kg and an AV below 80 mgKOH/g are reached (EGC=epoxy group content; AV=acid value).

According to a more preferred embodiment of said process, the first reaction step is actually composed of three addition steps wherein:
1(a) the epoxy resin is precharged, heated to 150°C for at least one hour in order to kill any peroxide present, purged with nitrogen and after cooling to 125°C a part of the catalyst is used, and purged with air,
1 (b) a mixture of 20 wt% of the mono unsaturated acid amount and a stabiliser is added(in one shot)
1(c) a mixture of 80 wt% of the mono unsaturated acid amount and a stabiliser is added (over a period of 30 minutes), and the reaction is carried out at a temperature in the range of from 115 to 135°C and preferably from 120 to 130°C over a period of 10 to 20 minutes.

The catalyst to be used in the first reaction step can be selected from a great variety of phosphine or phosphonium or amine or ammonium compounds. Preferred ones are selected from phosphines or phosphonium chlorides or bromides.

More preferred are those selected from triphenylphosphine, tri(o-tolyl)phosphine, tri(p-tolyl)phosphine, and alkyl phosphonium halides derived therefrom, wherein alkyl is preferably methyl. Stabilisers can be selected from the group consisting of hydroquinones, of which hydroquinone is the most preferred.

The VER of the present invention are characterised by a molecular weight MW in the range of from 900 to 2500 and preferably from 1000 to 2200, a molecular weight distribution (MW/Mn) in the range of from 1.0 to 1.8 and preferably from 1.2 to 1.6.

According to an alternative process embodiment for the preparation of a compatible resin, a glycidyl ester of an α, α branched alkane carboxylic acid component is first reacted with an acrylic acid component in a mutual equivalent ratio of 1 eq. COOH per eq. epoxy, in the presence of a catalyst such as a phosphine or phosphonium compound until an EGC below 400 mmol/kg. The acrylic acid component is previously mixed with an antioxidant stabilizer such as hydroquinone. Thereafter the dicarboxylic acid component (e.g. maleic anhydride) is added in one or more portions (preferably up to five) in an amount of 1 eq. COOH per eq. glycidyl ester component and per 1 eq. acrylic acid component, whereafter the exothermic reaction is well controlled by cooling to a temperature below 130°C and preferably of at most 125°C.

Subsequently the epoxy resin component, such as glycidylether of bisphenol A or F, is slowly added in amount of 1 eq. epoxy per 1 eq. starting glycidylester and 1 eq. acrylic acid component and in one or more portions preferably up to five.

The reaction is continued until an EGC below 350 mmol/kg and preferably below 335 mmol/kg and an AV below 10 mgKOH/g, and preferably below 9 mgKOH/g are reached.

After cooling, the obtained VER could be mixed with styrene and/or vinylester of α, α branched alkane carboxylic acid, such as CARDURA 9 or 10, to a finally desired curable composition, which can be cured with a radical forming initiator.

According to a more preferred embodiment of said process, the first reaction step is actually composed of two addition steps wherein
1(a) the CARDURA E10 is precharged and heated to 125°C. A mixture of 20 wt% of the monounsaturated acid amount and a stabiliser is added (in one shot)
1(b) a mixture of 80 %wt of the monounsaturated acid amount and a stabiliser is added(over a period of 30 minutes) and the reaction is carried out at a temperature in the range of from 115°C to 135°C and preferably from 120°C to 130°C over a period of 10 to 20 minutes.

It will be appreciated that another aspect of the present invention is formed by curable compositions, comprising at least one of the hereinbefore specified vinyl ester resins and at least one vinylester of α, α branched alkane carboxylic acids, containing from 5 to 14 carbon atoms in the acid moiety such as VeoVa 9, VeoVa 10, VeoVa 11 and VeoVa 13, and which can be cured by means of radical polymerisation after addition of one or more suitable radical initiators. Said radical initiators can be in general selected from a great variety of usual initiators, such as peroxides and azocompounds. Preferred initiators are, methyl ethyl ketone peroxide, di(tert butyl)peroxide, di(tert amyl)peroxide or mixtures thereof.

A further aspect of the invention is formed by said cured compositions, in the form of shaped articles.

It will be appreciated that the curable compositions may contain in addition to said VER and said vinyl ester, fillers and auxiliaries. Fillers preferably will consist of glass web, glass fibres or chopped glass fibres, minerals, clays, natural fibre webs (e.g. cotton, flax,hemp) or webs of carbon fibres or aramide fibres. The invention can be illustrated by the following examples, however without restricting its scope to their embodiments.

### Example 1

203 g of an epoxy resin EPIKOTE 828EL/LV (EGC=5419 mmol/kg) were precharged into a reactor. The reactor was heated to 150°C for one hour in order to kill any peroxide present and purged with nitrogen gas. The resin was cooled down to 125°C, and 0.408 g of triphenylphosphine were added and purged with air.

Thereafter a batch of 20 wt% of a mixture of acrylic acid (80 g) and hydroquinone (0.08 g, 0,1 %m AA) was added in one time, followed by the addition of 80 wt% of said mixture of acrylic acid and hydroquinone over 30 minutes (total amount of acrylic acid was 1 equivalent COOH per 1 equivalent epoxy). The reaction is continued for 15 minutes under air at a temperature of 125°C whereafter 0.952 g of triphenylphosphine were added.

The reaction was continued until an EGC of below 340 mmol/kg and AV of below 10 mgKOH/g had been reached, which corresponded respectively with a conversion of around 90% and around 95%.

107.8 g of maleic anhydride were added in 4 portions over a period of 1 hour at 125°C. The exothermal reaction was well controlled, and CARDURA E10P glycidyl ester (264 g) was thereafter dropwise added over a period of 1 hour.

The reaction was continued until an EGC of below 340 mmol/kg and an AV of below 45 mgKOH/g had been reached, which corresponded respectively with a conversion of 80% and about 95%.

| | |
|---|---|
| Molecular weight (Mw) | 2128 |
| Mw distribution | 1.4 |
| EGC (mmol/kg) | 340* |
| AV (mmol/kg) | 69** |

| | |
|---|---|
| * represents 90% conversion | |
| ** represents 95% conversion | |

The reaction mixture was cooled down and 220 g of VeoVa 9 vinylester were added (VeoVa is a trademark) at 90°C. A clear dark yellow transparent solution had been obtained, containing 20 wt% of VeoVa 9 vinyl ester.

In an analogous way a 40 wt% VeoVa 9 vinyl ester mixed with the unsaturated polyester was also prepared which was completely miscible either. Castings of these obtained unsaturated polyester/VeoVa 9 vinyl ester compositions were cured with diterbutylperoxide for 90 minutes at 120°C. Samples were cut with the diamond saw for testing and the physical properties thereof have been listed hereafter.

| Sample | VeoVa 9, % | Intiator, % DTBP | Charpy impact strength kJ/m² | Flexural modulus, MPa | Strain at break, % |
|---|---|---|---|---|---|
| A | 40 | 1 | 2.69 | 803.7 ± 24.9 | 2.67± 0.56 |
| B | 40 | 2 | 2.84 | 778.9 ± 33.1 | 3.22 ± 0.56 |
| C | 40 | 3 | 3.11 | 956.2 ± 16.4 | 2.69 ± 0.78 |
| D | 20 | 2 | 2.50 | 941.2 ± 40.2 | 2.51 ± 0.45 |

### Example 2

572.9 g of CARDURA E10P were precharged into a reactor. The reactor was heated to 125°C under N2 gas. 0.88 g of triphenyl phosphine was added and purged with air. Thereafter, a batch of 20 wt% of a mixture of acrylic acid (172 g) and hydroquinone (0.172 g) was added in one time, followed by the addition of 80 wt% of said mixture of acrylic acid and hydroquinone over 30 minutes (total amount of acrylic acid was 1 equivalent COOH per 1 equivalent epoxy). The reaction is continued for 15 minutes under air at a temperature of 125°C whereafter 2.07 g of triphenylphosphine was added.

The reaction was continued until an EGC of below 310 mmol/kg and AV of below 9 mgKOH/g had been reached which corresponded respectively with a conversion of around 90% and 95%.

233.9 g of maleic anhydride were added in 4 portions over a period of 30 minutes at 125°C. The exothermal reaction was well controlled, and EPIKOTE 828 (440.5 g) was thereafter added in 4 shots over a period of one hour. The reaction was continued until an EGC of below 331 mmol/kg and an AV of below 9 mgKOH/g had been reached, which corresponded respectively with a conversion of around 90% and 95%.

The reaction mixture was cooled down and either 300 g of VeoVa 9 or VeoVa 10 vinyl ester were added in 450 g of vinyl ester resin at around 90°C. A clear yellow transparent solution had been obtained, containing 40 wt% of VV9 or VV10 vinyl ester. Castings of these obtained unsaturated polyester/VeoVa 9 or VeoVa 10 vinyl ester compositions were cured with 1% of diterbutyl peroxide for 90 minutes at 120°C. The reaction mixture was cooled down and discharged.

A VER had been obtained having the following characteristics:

| | |
|---|---|
| Molecular weight (Mw) | 2807 |
| Mw distribution | 2.81 |
| EGC (mmol/kg) | 331* |
| AV (mmol/kg) | 167** |

| | |
|---|---|
| * represents 90% conversion | |
| ** represents 95% conversion | |

The VER was dissolved in 40% by weight of resin relative to the weight of the total composition in VeoVa 9 vinyl ester, in 40% by weight of resin in styrene and in 40% by weight of resin in VeoVa 10 vinyl ester respectively. TRIGONOX C was added as initiator in a proportion of 1% by weight and the system was cured for 90 minutes at 120°C.

Samples were cut with the diamond saw for testing and the mechanical/ physical properties thereof have been listed hereafter.

| Sample | Type of reactive solvent | Viscosity at 20,4°C mPas | Strain at break % | Flexural modulus MPa |
|---|---|---|---|---|
| A | Styrene | 110 | 8.12 ± 1,03 | 2775 ± 51 |
| B | VeoVa 9 | 1444 | 5.26 ± 0,18 | 762,2 ± 333 |
| C | VeoVa 10 | 2044 | 4.51 ± 0,31 | 577 ± 4,8 |

## Claims

1. High functionality vinyl ester resins, compatible with vinyl esters of α, α-branched alkane carboxylic acids and obtainable by the reaction of
(a) an epoxy resin having at least two epoxy groups per molecule
(b) an ethylenically unsaturated mono carboxylic acid containing from 3-10 carbon atoms
(c) a dicarboxylic acid or anhydride, preferably unsaturated diacid or anhydride, and most preferably an ethylenically unsaturated anhydride
(d) a glycidylester of an α, α branched alkane carboxylic acid having from 5-15 carbon atoms in the acid moiety and preferably from 9 to 13 carbon atoms.

2. High functionality vinyl ester resins according to claim 1, wherein component (a) is selected from diglycidyl ethers of bisphenol A or bisphenol F and glycidyl ethers of phenol or cresol novolacs.

3. High functionality vinyl ester resins according to claim 1, wherein component (b) is selected from ethylenically unsaturated carboxylic acids consisting of acrylic acid, α-alkyl substituted acrylic acid, wherein the alkyl group contains from 1 to 4 carbon atoms, crotonic acid, isocrotonic acid, cinnamic acid, allocinnamic acid, angelic acid, tiglic acid and the like.

4. High functionality vinyl ester resins according to claim 3, wherein component (b) is acrylic acid or methacrylic acid.

5. High functionality vinyl ester resins according to claim 1, wherein component (e) is selected from maleic acid, fumaric acid or maleic anhydride.

6. High functionality vinyl ester resins according to claim 1, wherein component (d) is consisting of monoglycidyl esters of α, α branched alkane carboxylic acids, wherein the acid moiety contains 10 carbon atoms.

7. High functionality vinyl ester resins according to claim 1, wherein the equivalent ratios between the constituents (a), (b), (c) and (d) can be specified as W:X:Y:Z wherein W=1, X=0.75-1.05, Y=1-2.05 and Z=-0.5-1.05.

8. Curable compositions, comprising of the high functionality vinyl ester resins and at least one vinyl ester of α, α branched alkane carboxylic acids, containing from 5 to 14 carbon atoms in the acid moiety, and which can be cured by means of radical polymerisation after addition of one or more suitable initiators.

9. Cured compositions in the form of shaped articles, obtained from the compositions of claim 8.
